Europäisches Patentamt

European Patent Office

Office européen des brevets

(19)

(11) **EP 1 216 907 A1**

(12) **DEMANDE DE BREVET EUROPEEN**

(43) Date de publication:
**26.06.2002 Bulletin 2002/26**

(51) Int Cl.⁷: **B60T 13/573**, B60T 13/565

(21) Numéro de dépôt: **01403028.2**

(22) Date de dépôt: **27.11.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **20.12.2000 FR 0016633**

(71) Demandeur: **Delphi Technologies, Inc.**
**Troy, MI 48007 (US)**

(72) Inventeurs:
• **Castel, Philippe**
  **75005 Paris (FR)**
• **Poupard, Dominique**
  **95130 Franconville (FR)**
• **Genaudeau, Joseph**
  **77186 Noisiel (FR)**

(74) Mandataire: **Abello, Michel**
  **Cabinet Peuscet,**
  **78, avenue Raymond Poincaré**
  **75116 Paris (FR)**

(54) **Systèm de commande de freinage amélioré muni d'un servomoteur d'assistance et d'une réaction hydraulique.**

(57)    Ce système de commande de freinage muni d'un servomoteur d'assistance (7), ledit système de commande comportant un maître-cylindre (1), un piston composite (3) pour générer une pression de commande (P1), ledit piston composite (3) comprenant un piston annulaire (18) engagé dans ledit maître-cylindre et un piston central (119) mobile dans ledit piston annulaire, un moyen de commande (16) déplaçable par un opérateur entre au moins une position de commande pour activer ledit servomoteur d'assistance et une position de repos dans laquelle le servomoteur d'assistance est à l'état passif, est caractérisé par le fait que le servomoteur d'assistance à l'état activé exerce sur le piston central (119) une force d'assistance (Fp) afin de générer ladite pression de commande, le piston annulaire étant apte, sous l'action de ladite pression de commande, à transmettre audit moyen de commande une force de réaction (Fr) pour permettre audit opérateur de contrôler ladite pression de commande.

FIG.3

EP 1 216 907 A1

## Description

La présente invention concerne les systèmes de commande de freinage munis d'un servomoteur d'assistance.

Dans les véhicules automobiles, on munit couramment le système de commande de freinage d'un servomoteur d'assistance permettant de générer une pression de commande dans un maître - cylindre sans faire supporter à un opérateur du système la totalité de l'effort de poussée nécessaire. Un tel système comp orte un moyen de commande déplaçable par l'opérateur depuis une position de repos vers une position de commande pour activer le servomoteur. On munit également couramment un tel système d'un moyen de réaction permettant de transmettre au moyen de commande un effort de réaction variant en fonction de la pression de commande et dirigé vers la position de repos du moyen de commande, de manière que l'opérateur puisse sentir et moduler la pression de commande par l'intermédiaire du moyen de commande.

On connaît, par exemple par US 5 572 870, de tels systèmes dans lesquels le moyen de réaction est un disque déformable en caoutchouc. Un tel disque de réaction est susceptible de détérioration par fatigue, ce qui présente un inconvénient.

On connaît aussi, par exemple par US 5 921 084 ou par EP 443 886, un système de commande de freinage sans disque de réaction. Ce système de commande à réaction hydraulique comporte :

- un maître-cylindre présentant un alésage ouvert sur une extrémité, dite arrière, dudit maître-cylindre,
- un piston composite engagé dans ledit alésage pour générer une pression de commande dans un volume intérieur dudit maître -cylindre, ledit piston composite comprenant un cylindre creux déplaçable de manière étanche dans le maître-cylindre selon sa direction axiale et un poussoir mobile axialement de manière étanche dans le cylindre creux, le volume intérieur étant situé entre le piston composite et une paroi de fond et étant rempli d'un fluide sensiblement incompressible destiné à transmettre ladite pression de commande à au moins un frein à commande hydraulique,
- un moyen de commande déplaçable par un opérateur entre au moins une position de commande pour activer le servomoteur d'assistance et une position de repos dans laquelle le servomoteur d'as sistance est à l'état passif.

Dans ces systèmes connus à réaction hydraulique, le servomoteur comporte une cloison mobile solidaire du cylindre creux, pour transmettre une force pneumatique directement au cylindre creux et le moyen de réaction est le pouss oir qui coulisse de manière étanche dans le cylindre creux. Un moyen de rappel élastique est disposé entre le cylindre creux et le poussoir pour pousser ce dernier vers le maître - cylindre. Le poussoir porte également une valve apte à interrompre la communication entre les volumes intérieurs respectifs du maître- cylindre et du cylindre creux Ces systèmes présentent une conception complexe avec un nombre important de pièces, ce qui les rend coûteux.

Le but de l'invention est de fournir un système de commande de freinage à réaction hydraulique du type ci -dessus qui soit amélioré, c'est-à-dire simplifié pour présenter un coût moindre et/ou présentant une sécurité de fonctionnement améliorée.

Pour cela, l'invention fournit un système de commande de freinage muni d'un servomoteur d'assistance, ledit système de commande comportant :

- un maître-cylindre présentant un alésage ouvert sur une extrémité, dite arrière, dudit maître-cylindre,
- un piston composite mobile selon une direction axiale de l'alésage pour générer une pression de commande dans une chambre primaire du maître-cylindre, ledit piston composite comprenant un piston annulaire engagé dans ledit alésage et déplaçable de manière étanche dans l'alésage selon sa direction axiale et un piston central mobile axialement de manière étanche dans ledit piston annulaire,
- un moyen de commande déplaçable par un opérateur entre au moins une position de commande pour activer ledit servomoteur d'assistance et une position de repos dans laquelle le servomoteur d'assi stance est à l'état passif,

caractérisé par le fait que le servomoteur d'assistance est agencé pour exercer, à l'état activé, sur le piston central, une force d'assistance pour générer la pression de commande, le piston annulaire étant apte, sous l'action de la pression de commande, à transmettre au moyen de commande une force de réaction orientée vers la position de repos.

Avantageusement, le moyen de commande comporte une tige de commande agencée derrière le piston composite et mobile selon ladite direction axiale, la tige de commande étant apte à recevoir du piston annulaire et à transmettre audit opérateur la force de réaction, la tige de commande étant apte à recevoir dudit opérateur une force de commande pour déplacer la tige de commande vers la position de commande et à transmettre au piston annulaire la force de commande pour générer, en combinaison avec ladite force d'assistance, la pression de commande.

Avantageusement, le maître-cylindre comporte un conduit destiné à relier la chambre primaire à un réservoir de fluide pour permettre une réalimentation permanente en fluide dans la chambre primaire, même par exemple en cas de fuite légère ou en cas d'usure importante ou de dilatation due à la température en aval. Le piston annulaire est alors agencé de manière à être déplacé par la tige de commande dans la position de commande à une position dans laquelle le piston annulaire obture ledit conduit, afin de permettre une augmentation de la pression de commande dans la chambre primaire. Ainsi, contrairement aux systèmes connus, dans lesquels l'obturation d'un conduit entre la chambre primaire et un réservoir de fluide est assurée par le cylindre creux lié au servomoteur, le piston annulaire selon l'invention obture le conduit directement sous l'action de 1a force de commande et dès son début de course, indépendamment du temps de réponse du servomoteur, et même en cas de défaillance du servomoteur. Cette caractéristique réduit le temps d'établissement de la pression de commande dans la chambre primaire et donc le temps de réponse du système, ce qui accroît sa sécurité.

Selon une caractéristique particulière de l'invention, le piston composite comporte une cloison transversale pour définir une chambre de réaction séparable de ladite chambre primaire, ladite cloison transversale étant percée d'un orifice de communication pour mettre en communication la chambre primaire et la chambre de réaction, ledit orifice de communication étant ouvert dans un état de fonctionnement normal du système, de sorte que la pression dans la chambre de réaction est alors sensiblement égale à la pression de commande dans la chambre primaire, le système comportant un moyen pour obturer ledit orifice de communication dans un état de fonctionnement de panique du système, de sorte que la chambre de réaction est alors isolée de la pression de commande régnant dans la chambre primaire.

De préférence, le piston annulaire est apte à coulisser axialement par rapport au piston central vers l'avant sous l'action de la force de commande, le système étant dans ledit état de fonctionnement normal lorsqu'un décalage du piston annulaire dans la direction avant par rapport au piston central est inférieur à une amplitude maximale prédéterminée, le système étant dans ledit état de fonctionnement de panique lorsque le décalage atteint ladite amplitude maximale, le piston central étant apte, dans l'état de fonctionnement de panique du système, à recevoir la force de commande depuis la tige de commande pour générer la pression de commande indépendamment de la force d'assistance.

Avantageusement, ladite amplitude maximale du décalage vers l'avant du piston annulaire correspond à une venue en butée du piston annulaire par rapport au piston central au niveau de la cloison transversale de manière à obturer ledit or ifice de communication.

Selon un mode de réalisation particulier de l'invention, le piston central s'étend vers un fond dudit alésage au -delà du piston annulaire et porte à son extrémité avant la cloison transversale séparant ladite chambre primaire, située entre la cloison transversale et ledit fond, de la chambre de réaction située entre la cloison transversale et le piston annulaire, de sorte que le piston annulaire est soumis à la pression régnant dans la chambre de réaction.

De préférence dans ce cas, ledit moyen pour obturer l'orifice de communication comporte un clapet monté dans ledit orifice de communication, ledit clapet comportant un poussoir mobile axialement dans ledit orifice entre une position d'ouverture, pour laquelle ledit orifice est ouvert et une position de fermeture, dans laquelle ledit poussoir obture ledit orifice de manière sensiblement étanche, une extrémité avant du piston annulaire en position de panique étant apte à repousser le poussoir en position de fermeture. Le clapet peut comporter un ressort de rappel en appui entre la cloison transversale et le poussoir pour pousser ledit poussoir vers sa position d'ouverture.

Selon un autre mode de réalisation de l'invention, la cloison transversale est fixée à l'intérieur du piston annula ire, le piston central comportant un corps coulissant de manière étanche à l'intérieur du piston annulaire derrière ladite cloison transversale, le piston central portant un support s'étendant à l'avant du piston central à travers ledit orifice de communication, ledit moyen pour obturer l'orifice de communication comportant un joint d'étanchéité fixé audit support à l'avant de ladite cloison transversale et agencé de manière à venir en contact hermétique avec la cloison transversale autour dudit orifice de communication lorsque le piston annulaire est en position de panique.

On obtient ainsi un système de commande de freinage offrant un mode de fonctionnement de panique tout en ayant une conception particulièrement simple, ce qui assure un bon rapport entre la performance du système et ses coûts de réalisation.

De préférence dans ce cas, la chambre de réaction est définie entre la cloison transversale et le corps du piston central, la chambre primaire comprenant une portion de l'intérieur du piston annulaire située à l'avant de ladite cloison transversale et en communication avec l'alésage du maître -cylindre.

Selon une autre forme de réalisation, le support comporte une tête coulissant de manière étanche dans ledit piston annulaire à l'avant de ladite cloison transversale, ladite chambre de réaction comprenant un espace avant défini entre ladite tête de support et ladite cloison transversale, ladite chambre primaire comprenant une portion de l'intérieur du piston annulaire située à l'avant de ladite tête de support et en communication avec l'alésage du maître -cylindre, ladite tête de support étant traversée par un canal débouchant derrière ledit joint d'étanchéité de manière à relier ladite chambre primaire à une chambre intermédiaire définie entre ladite clois on transversale et ledit piston central.

Dans ces modes de réalisation, la chambre primaire du maître-cylindre est en communication avec un volume intérieur du piston annulaire s'étendant jusqu'à la cloison transversale, laquelle peut se situer à un niveau du piston annulaire situé à l'extérieur de l'alésage du maître-cylindre. De ce fait, le volume de la chambre primaire n'est pas limité par le seul volume du maître -cylindre, de sorte que le maître-cylindre peut être raccourci par rapport aux conceptions classiques. Les avantages d'un maître -cylindre raccourci sont multiples : diminution de l'encombrement du système de commande de freinage, réduction du poids et du coût de réalisation du maître- cylindre.

Avantageusement, un moyen de rappel élastique est ag encé dans ledit espace avant comprimé entre ladite tête de support et ladite cloison transversale, de manière à faciliter une réouverture dudit orifice de communication lorsque la force de commande diminue.

De préférence dans ce cas, l'intérieur du piston annulaire présente un étage arrière dans lequel coulisse de manière étanche ledit corps du piston central et, entre ledit étage arrière et ladite cloison transversale, un étage intermédiaire dans lequel coulisse de manière étanche une partie de tête dudit piston annulaire, ladite chambre intermédiaire étant définie entre ladite cloison transversale et ladite partie de tête du piston annulaire.

Avantageusement, l'étage intermédiaire du piston annulaire présente une section plus petite que l'étage arrière et plus grande que l'orifice de communication, ladite chambre de réaction comportant un espace arrière défini entre ledit corps du piston central et l'étage arrière du piston annulaire, un conduit de liaison étant ménagé dans la paroi du piston annulaire pour relier l'espace avant et l'espace arrière.

Avantageusement, le servomoteur d'assistance comporte un carter agencé derrière le maître -cylindre, ledit carter étant séparé par une paroi transversale, mobile axialement de manière sensiblement étanche dans ledit carter, en une chambre à basse pression située à l'avant de la paroi transversale, ladite chambre à basse pression étant reliée à une source de dépression pour y maintenir une pression sensiblement inférieure à la pression atmosphérique, et une chambre de travail située à l'arrière de ladite paroi transversale, la paroi transversale étant percée d'un canal de communication entre la chambre de travail et la chambre à basse pression, le moyen de commande étant apte à actionner des moyens d'obturation séle ctifs pour, à la position de repos dudit moyen de commande, ouvrir ledit canal de communication et fermer un passage entre la chambre de travail et l'extérieur du carter, de sorte que le servomoteur est alors inactif, ladite basse pression étant aussi établie dans la chambre de travail et, à la position de commande du moyen de commande, obturer ledit canal de communication et ouvrir ledit passage, pour laisser s'établir une pression supérieure à ladite basse pression dans la chambre de travail, le servomoteur étant alors activé, ladite paroi transversale étant liée au piston central, pour lui transmettre la force d'assistance Fp pneumatique résultant de l'écart entre les pressions dans la chambre à basse pression et la chambre de travail. Bien entendu, tout autre type de servomoteur apte à agir sur le piston central et apte être commandé par un moyen de commande pourrait être utilisé.

L'invention sera mieux comprise, et d'autres buts, détails, caractéristiques et avantages de celle -ci apparaîtront plus clairement au cours de la description suivante de plusieurs modes de réalisation particuliers de l'invention, donnés uniquement à titre illustratif et non limitatif, en référence au dessin annexé. Sur ce dessin :

- la figure 1 est une vue en coupe axiale d'un premier mode de réalisation de système selon l'invention, le moyen de commande manuel étant en position de repos ;
- la figure 2 est une vue analogue à la figure 1 avec le moyen de commande manuel en position de commande ;
- la figure 3 est une vue en coupe axiale d'un deuxième mode de réalisation de système selon l'invention, le moyen de commande manuel étant en position de repos ;
- la figure 4 est une vue analogue à la figure 3 avec le moyen de commande manuel en position de commande, le système étant en état de fonctionnement normal ;
- la figure 5 est une vue analogue à la figure 3 avec le moyen de commande manuel en position de commande, le système étant en état de fonctionnement de panique ;
- la figure 6 est une vue en coupe axiale d'un troisième mode de réalisation de système selon l'invention, en position de repos ;
- la figure 7 représente le système de la figure 6 en état de fonctionnement normal ;
- la figure 8 représente le système de la figure 6 en état de fonctionnement de panique ;
- la figure 9 est une vue de détail du système de la figure 6 définie par le cadre IX, mais selon un plan de coupe perpendiculaire au plan de la figure 6,
- la figure 10 représente une variante du troisième mode de réalisation de système selon l'invention, en position de repos, en vue partielle agrandie définie par le cadre X de la figure 9.

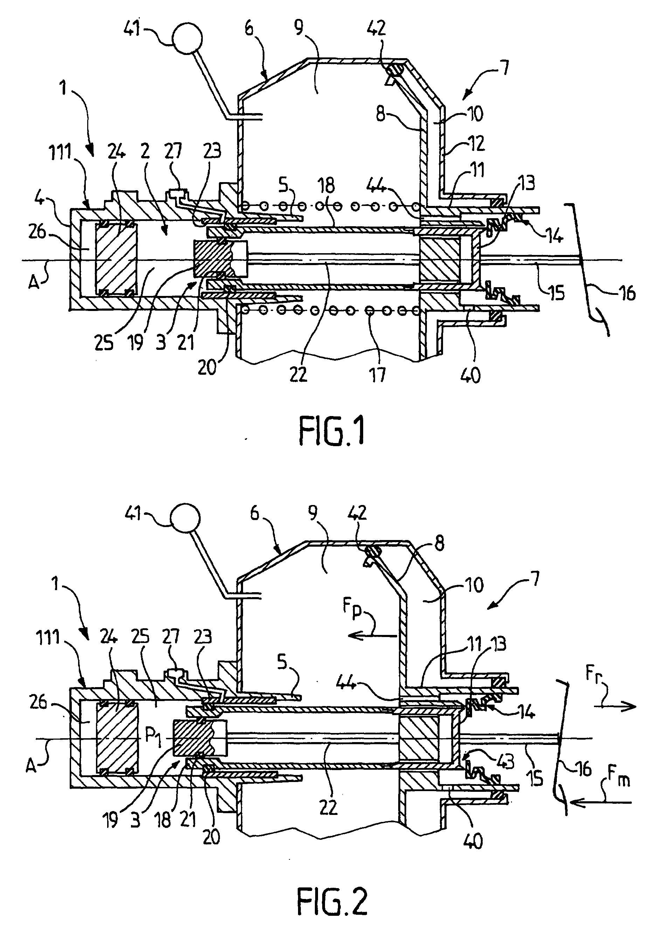

On va maintenant décrire un premier mode de réalisation de l'invention en référence aux figures 1 et 2.

Le système de commande comporte un maître -cylindre 1 comprenant un corps 111 muni d'un alésage axial 2 d'axe A dans lequel est engagé un piston composite 3. Par convention, on désigne l'extrémité du maître-cylindre 1 fermée par une paroi de fond 4 comme étant l'avant du système. L'extrémité arrière 5 du maître -cylindre 1 est ouverte et débouche dans un carter 6 d'un servomoteur à dépression 7. Le carter 6 est assemblé de manière étanche au maître -cylindre 1. Le maître-cylindre 1 comprend en outre des moyens élastiques de rappel (ressorts) connus de l'homme de l'art, non représentés ici et situés, par exemple, entre le piston 3 et un piston secondaire 24 et entre le piston secondaire 24 et le corps 111 de maître -cylindre.

Le servomoteur à dépression 7 comporte classiquement une paroi transversale 8 mobile axialement dans le carter 6 et séparant celui-ci en une chambre avant 9 dite chambre à basse pression, qui est reliée à une source de dépression 41 pour y maintenir une basse pression sensiblement inférieure à la pression atmosphérique, et une chambre arrière 10 dite chambre de travail. La paroi transversale 8 porte un diaphragme en caoutchouc 42 en contact avec le carter 6 pour séparer de manière étanche les deux chambres 9 et 10. La paroi transversale 8 est assemblée à un piston moteur 11 mobile axialement de manière étanche à travers une ouverture de la face arrière 12 du carter 6. Un plongeur 13 est engagé axialement à travers le piston moteur 11 et peut coulisser de manière étanche par rapport à celui -ci. Une tige de commande 15 a son extrémité avant liée au plongeur 13 et son extrémité arrière reliée à une pédale de frein 16 ou à tout autre moyen de commande équivalent pour la déplacer axialement afin de commander à pied ou manuellement le système.

Le piston moteur 11 porte un clapet caoutchouc 14 qui coopère avec le plongeur 13 pour activer et désactiver le servomoteur 7. A la position de repos du système, représentée à la figure 1, la tige de commande 15 et le plongeur 13 sont reculés, le plongeur 13 coopère avec le clapet caoutchouc 14 pour, d'une part, ouvrir un canal de communication 44 ménagé dans la paroi transversale 8 entre les deux chambres 9 et 10 et, d'autre part, isoler la chambre de travail 10 de l'air extérieur. La basse pression est alors établie dans les deux chambres 9 et 10. La paroi transversale 8 est maintenue en position de repos à l'arrière du carter 6 par un ressort de rappel 17. Le servomoteur 7 est alors passif.

Lorsqu'un opérateur (non représenté) exerce sur la pédale de frein 16 une force de commande Fm orientée vers l'avant, comme visible à la figure 2, il déplace le plongeur 13 par rapport au piston moteur 11, de manière à provoquer conjointement la fermeture du canal de communication 44 entre les deux chambres 9 et 10 du carter 6 par le clapet caoutchouc 14 et l'ouverture d'un passage 43 d'air extérieur entre le plongeur 13 et le clapet caoutchouc 14 vers la chambre de travail 10 via un trou oblong 40 ménagé dans le piston moteur 11. Ainsi, la pression augmente jusqu'à la pression atmosphérique dans la chambre de travail 10 mais reste égale à la basse pression dans la chambre à basse pression 9. Cet écart de pression est à l'origine d'une force pneumatique d'assistance Fp qui s'exerce sur la cloison 8 dans la direction avant et la fait avancer. Le servomoteur 7 est alors activé.

Le piston composite 3 comporte un piston annulaire 18 mobile axialement dans le corps 111 du maître cylindre 1 et comportant un alésage axial dans lequel un piston primaire 19 est également mobile axialement. Le piston annulaire 18 comporte sur sa périphérie extérieure un joint ou une coupelle d'étanchéité 20 pour assurer un contact étanche avec la paroi latérale 23 du maître -cylindre 1. Le piston primaire 19 comporte sur sa périphérie extérieure un joint d'étanchéité 21 pour assurer un contact étanche avec le piston annulaire 18.

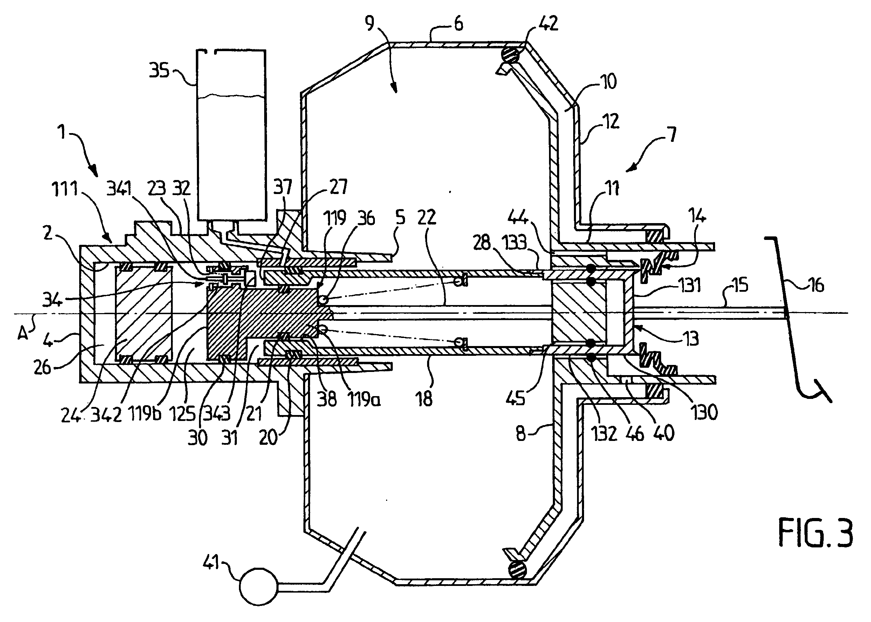

Entre l'extrémité avant du piston composite 3 et le fond 4, l'alésage 2 du maître-cylindre est divisé par le piston secondaire mobile 24 en contact étanche avec la paroi latérale 23 du maître -cylindre 1 en une chambre primaire 25 définie entre le piston composite 3 et le piston secondaire 24 et une chambre secondaire 26 définie entre le piston secondaire 24 et le fond 4. Les chambres primaire 25 et secondaire 26 sont remplies d'un liquide hydraulique sensiblement incompressible et sont destinées à être reliées à des freins à com mande hydraulique. Pour maintenir en permanence un volume de liquide hydraulique adéquat dans la chambre primaire 25, la paroi latérale 23 du maître-cylindre présente un conduit 27 qui relie la chambre primaire 25 à un réservoir 35, visible à la figure 3. Le liquide hydraulique dans le réservoir 35 est par exemple soumis à une pression sensiblement égale à la pression atmosphérique. A la position de repos du système, visible à la figure 1, le conduit 27 est ouvert et la pression établie dans la chambre primaire est également la pression atmosphérique.

Le plongeur 13 traverse le piston moteur 11 et est relié par son extrémité avant au piston annulaire 18 pour lui transmettre la force de commande Fm. Comme mieux visible sur la figure 3, le plongeur 13 présente une paroi d'extrémité arrière 131 à laquelle est assemblée la tige de commande 15 et une partie médiane comportant une bague 130 se prolongeant vers l'avant par plusieurs, par exemple trois, bras 132 engagés axialement à travers autant d'alésages 45 du pi ston moteur 11 et prolongés chacun par un doigt 133 en saillie axialement vers l'avant. L'assemblage entre le plongeur 13 et le piston annulaire 18 est réalisé par exemple par un crabotage entre les doigts 133 du plongeur 13 et des rainures axiales 28 ménagées sur la face extérieure du piston annulaire 18 à son extrémité arrière. Chaque bras 132 peut être entouré d'un joint d'étanchéité 46, visible à la figure 3, pour coulisser de manière étanche par rapport au piston moteur 11 dans les alésages 45.

Ainsi, lorsque le plongeur 13 avance sous l'action de la force de commande Fm pour activer le servomoteur 7, il provoque également un mouvement vers l'avant du piston annulaire 18. En position de repos, le joint d'étanchéité 20 est positionnée juste derrière l'entrée du conduit 27, sensiblement contiguë à elle, comme visible sur la figure 1. Ainsi, le moindre déplacement vers l'avant du piston annulaire 18 poussé par le plongeur 13 provoque l'obturation du conduit de réalimentation 27 par le joint 20 et engendre u ne pression de commande hydraulique P1 supérieure à la pression atmosphérique dans la chambre primaire du maître -cylindre.

Le piston moteur 11 est relié au piston primaire 19 par une tige de piston 22 rigide s'étendant dans le piston annulaire 18. Ainsi, lorsque le servomoteur 7 est activé suite à un décalage vers l'avant du plongeur 13, la force pneumatique Fp est transmise au piston primaire 19 qui avance également dans la chambre primaire 25 pour générer ladite pression de commande P1. Ainsi, la pression de commande P1 vérifie :

$$P1.(S_{18}+S_{19})=Fp+Fm,$$

où $S_{18}$ et $S_{19}$ sont les sections transverses respectives du piston annulaire 18 et du piston primaire 19 en contact avec la chambre primaire 25. Ainsi, le piston annulaire 18 est soumis à une force de réaction Fr de sens opposé à la force de commande Fm et d'intensité :

$$Fr= (Fp+Fm).S_{18}/(S_{18}+S_{19}).$$

Le choix des sections $S_{18}$ et $S_{19}$ permet donc d'ajuster la démultiplication entre la force pneumatique Fp et la force de réaction Fr. La force de réaction Fr est transmise par le piston annulaire 18 à l'opérateur par l'intermédiaire du plongeur 13, de la tige de commande 15 et de la pédale de frein 16. Le piston annulaire 18 remplit ainsi le rôle de piston de réaction du système. La force de réaction Fr permet à l'opérateur de contrôler la pression de commande P1.

On va maintenant décrire un deuxième mode de réalisation de l'invention en référence aux figures 3 à 5. Les éléments identiques au premier mode de réalisation gardent les mêmes chiffres de référence et ne sont pas décrits à nouveau. Dans ce deuxième mode de réalisation, la structure du piston primaire est modifiée par rapport au premier mode de réalisation pour permettre un mode de fonctionnement de panique du système.

Le piston primaire 119 présente maintenant deux parties successives dans la direction axiale : une première partie 119a de section sensiblement égale à la section de l'alésage 38 du piston annulaire 18 et une seconde partie 119b de section sensiblement égale à la section de l'alésage 2 du corps de maître-cylindre 1. La première partie 119a porte le joint d'étanchéité 21 pour coulisser de manière étanche dans l'alésage 38 et s'étend vers l'avant au -delà du bord avant 37 du piston annulaire 18. La seconde partie 119b prolonge la première partie 119a vers l'avant et porte un joint d'étanchéité 30 pour coulisser de manière étanche dans l'alésage 2. La seconde partie 119 b du piston primaire 119 sépare l'alésage 2 en une chambre primaire 125 définie entre elle-même et le piston secondaire mobile 24 et une cha mbre de réaction 31 définie entre elle-même et bord avant 37 du piston annulaire 18. Le conduit 27 dans la paroi latérale 23 du maître -cylindre 1 relie le réservoir 35 de liquide hydraulique à la chambre de réaction 31.

La seconde partie 119b du piston primaire 119 présente un orifice de communication 32 entre les chambres 125 et 31 dans lequel est monté un clapet 34 pour obturer de manière sélective l'orifice 32. Le clapet 34 comporte un poussoir 343 agencé dans la chambre 31 à l'entrée de l'orifice 32, en vis-à-vis du bord 37 du piston annulaire 18, une tige 341 liée au poussoir 343 et engagée axialement à travers l'orifice 32 et un ressort de rappel 342 avec une extrémité en appui contre un épaulement de l'orifice 32 et l'autre extrémité en appui sur une rondelle fixée à la tige 341, afin de repousser la tige 341 et le poussoir 343 vers l'arrière, à une position d'ouverture. Le poussoir 343 en position d'ouverture n'obture pas l'orifice 32, de sorte qu'une pression égale puisse s'établir dans les chambres 125 et 31. Bien sûr, tout autre moyen d'obturation sélectif équivalent au clapet 34 pourrait être utilisé.

A la position de repos du système, visible à la figure 3, l'orifice 32 et le conduit 27 sont ouverts, de sorte que la pression dans les chambres 125 et 31 est sensiblement égale à la pression atmosphérique.

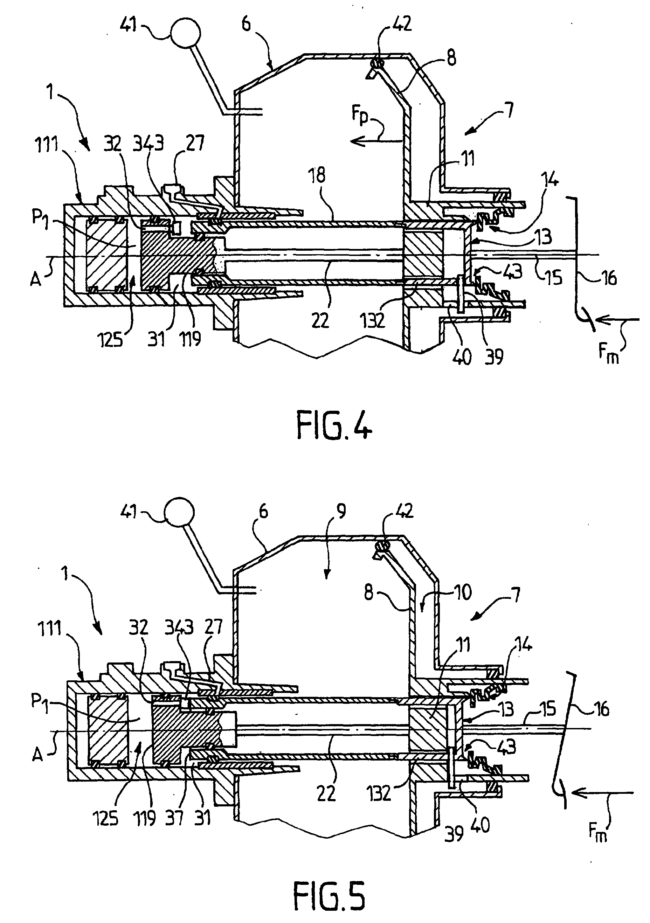

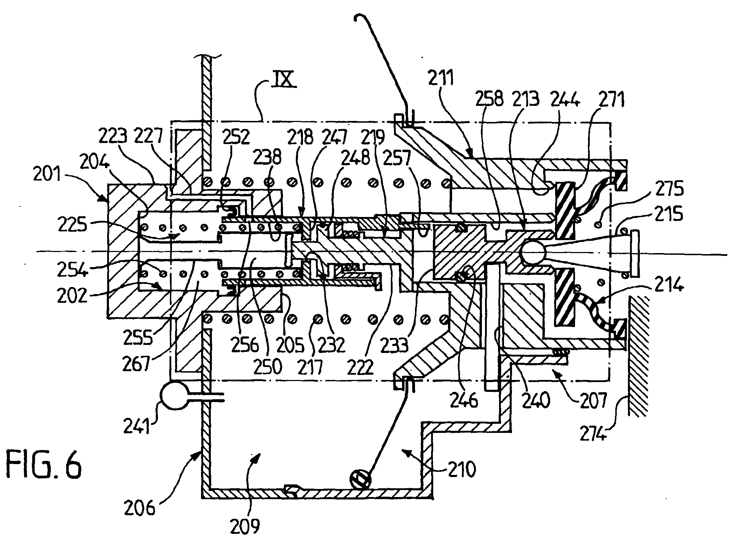

Dans le cas où une force de commande Fm est appliquée à la pédale de frein 16, le système peut entrer soit dans un mode de fonctionnement normal, représenté à la figure 4, soit dans un mode de fonctionnement de panique, représenté à la figure 5.

Lorsque la force de commande Fm est appliquée, le piston annulaire 18 avance dans la chambre de réaction 31 pendant que le décalage vers l'avant du plongeur 13 par rapport au piston moteur 11 active le servomoteur 7. L'établissement d'une pression pneumatique dans la chambre de travail 10 supérieure à la basse pression dans la chambre 9 a lieu avec un certain retard qui conditionne le temps de réponse du servomoteur 7 et qui dépend de la taille de l'ouverture du passage 43 d'air vers la chambre 10, taille d'ouverture qui est sensiblement proportionnelle au décalage vers l'avant du plongeur 13 par rapport au piston moteur 11. Ce retard est par exemple de l'ordre de 50 à 200 ms.

Lorsque l'intensité de la force de commande Fm est modérée, par exemple dans le cas d'un freinage non urgent, le mouvement d'avance du piston annulaire 18 est lent et, à l'issue dudit retard, le piston central 119 poussé par la cloison 8 suit le piston annulaire 18 avec un faible décalage, par exemple sensiblement inférieur à 1,2 mm, de sorte que le piston central 119 et le piston annulaire 18 se déplacent sensiblement ensemble pendant toute la durée de la commande de freinage. Ce décalage est défini par rapport à la position de repos du système. Le système est alors en mode de fonctionnement normal, comme visible à la figure 4.

Lorsque au contraire, la force de commande Fm est intense, par exemple dans le cas d'un freinage très urgent, le mouvement d'avance du piston annulaire 18 est rapide et, pendant ledit retard, le piston central 119 n'étant pas encore déplacé par le servomoteur 7, le piston annulaire 18 se décale vers l'avant par rapport au piston central 119 jusqu'à une position de butée, dans laquelle l'ouverture du passage 43 entre le clapet caoutchouc 14 et le plongeur 13 est maximale. Le système est alors en mode de fonctionnement de panique, comme visible à la figure 5. Par exemple, le décalage entre le piston annulaire 18 et le piston central 119 en position de panique est de l'ordre de 1,2 à 1,5 mm. Dans sa position de butée, le piston annulaire 18 pousse par son bord 37 le poussoir 343 du clapet 34 jusqu'à la position de fermeture dudit clapet 34, supprimant ainsi toute communication entre la chambre de réaction 31 et la chambre primaire 125. Le piston annulaire 18 n'est alors plus soumis à la pression de commande P1 dans la chambre primaire 125.

De préférence, une clavette 39 est liée au plongeur 13 et fait saillie radialement à travers le trou oblong 40 ménagé dans le piston moteur 11 pour limiter le décalage axial entre le plongeur 13 et le piston moteur 11. Le trou oblong 40 remplit aussi la fonction de passage d'air entre la chambre de travail 10 et l'alésage axial du piston moteur 11, pour mettre en communication la chambre de travail 10 avec l'air extérieur à travers l'alésage axial du piston moteur 11 lorsque le servomoteur est activé. Dans le mode de fonctionnement normal, la clavette 39 est libre de se déplacer axialement dans le trou oblong 40. Dans le mode de fonctionnement de panique, la clavette 39 est en butée contre le bord avant du trou oblong 40 pour définir la position de butée du piston annulaire 18. En variante, la pièce de butée du piston annulaire 18 en position de panique pourrait être le poussoir 343 ou la seconde partie 119b du piston central 119.

Le seuil d'intensité de force de commande séparant le mode de fonctionnement normal du mode de fonctionnement de panique est prédéterminé en fonction du temps de réponse du servomoteur 7. Un ressort 36 précontraint en compression peut être inséré dans le piston annulaire 18 autour de la tige de piston 22 avec une extrémité en appui contre le piston central 119 et une autre extrémité en appui sur le piston annulaire 18 de manière à régler le niveau dudit seuil. Le ressort 36 permet également d'accroître la force de réaction Fr.

Du fait de la butée du piston annulaire 18 sur le piston central 119, la force de commande Fm est transmise au piston central 119 pour générer la pression de commande P1 dans la chambre primaire 125 indépendamment de la force pneumatique Fp, notamment avant que la force pneumatique Fp ne prenne effet. De plus, l'obturation du conduit 27 par le piston annulaire 18 est effective dès le début du déplacement du piston annulaire 18 vers l'avant, avant même que celui-ci atteigne sa position de butée. L'augmentation de la pression de commande P1 dans la chambre primaire 125 est donc sensiblement immédiate.

Ainsi, en cas de défaillance du servomoteur 7 ou/et de freinage en mode de panique, le système présente un temps de réponse plus court que les arrangements connus, dans lesquels l'obturation d'un conduit entre la chambre primaire et un réservoir 35 de fluide hydraulique est assurée par un organe lié au servomoteur, ce qui accroît la sécurité du système.

On va maintenant décrire un troisième mode de réalisation de l'invention en référence aux figures 6 à 10. Les éléments identiques ou analogues au premier mode de réalisation portent les mêmes chiffres de référence augmentés de 200.

En référence à la figure 6, le système de commande du troisième mode de réalisation comporte un maître-cylindre 201 muni d'un alésage axial 202 d'axe A. L'extrémité arrière 205 du maître-cylindre 201 est ouverte et débouche dans un carter 206 d'un servomoteur à dépression 207. Le servomoteur à dépression 207 est identique au servomoteur à dépression 7 décrit ci-dessus quant à son fonctionnement. Le carter 206, dont seule une moitié inférieure est représentée, est assemblé de manière étanche au maître-cylindre 201. Le maître-cylindre 201 et le servomoteur 207 sont fixés sur un tablier 274 délimitant l'avant de l'habitacle d'un véhicule automobile par des moyens de fixations bien connus de l'homme du métier et qui ne sont pas représentés.

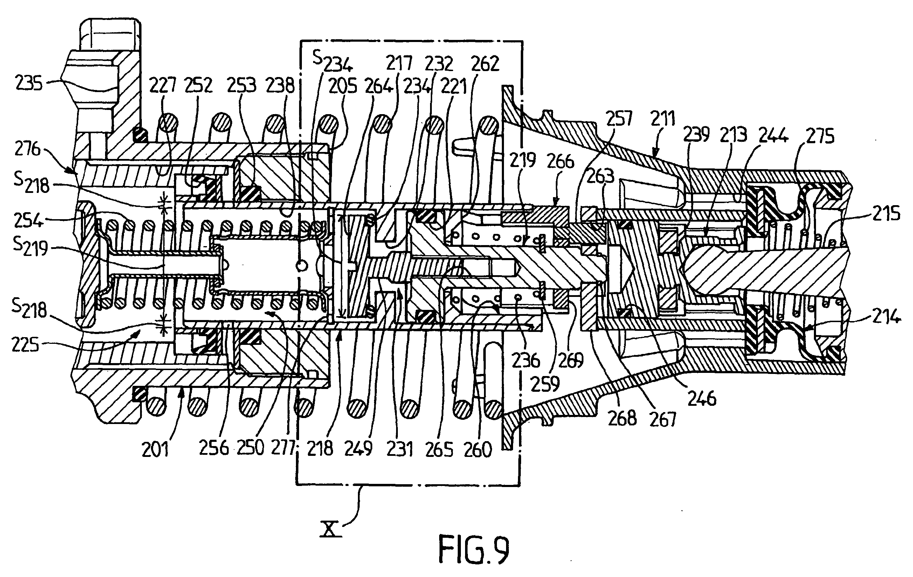

Un piston annulaire 218 est engagé dans l'alésage 202 et mobile selon l'axe A dans celui-ci. La paroi latérale 223 du maître-cylindre 201 porte, sur l'intérieur de l'alésage 202, deux coupelles d'étanchéité 252 et 253, visibles à la figure 9, pour assurer un contact étanche avec le piston annulaire 218. Le piston annulaire 218 présente un alésage axial 238 dans lequel est agencée une cloison transversale 247 percée d'un orifice 232. Le corps 248 d'un piston primaire 219 est également mobile axialement de manière étanche dans l'alésage 238 derrière la cloison 247. Le piston annulaire 218 et le piston primaire 219 constituent un piston composite 203. Le corps 248 du piston primaire 219 porte sur sa périphérie extérieure un joint d'étanchéité 221 pour assurer un contact étanche avec le piston annulaire 2 18.

Une chambre primaire 225 est définie entre le fond 204 de l'alésage 202 et la cloison transversale 247 dans le piston annulaire 218. La chambre primaire 225 est remplie d'un liquide hydraulique sensiblement incompressible et est destinée à être reliée à des freins à commande hydraulique. Un ressort de rappel 254 précagé par un tube télescopique 255 est logé dans la chambre primaire 225 avec une extrémité en appui sur le fond 204 et l'autre extrémité en appui sur le piston annulaire 218 pour rappeler le piston annulaire 218 vers l'arrière du maître-cylindre 201. Une chambre de réaction 231 est définie dans l'alésage 238 entre la cloison 247 et le corps 248 du piston primaire 219.

Pour maintenir en permanence un volume de liquide hydraulique adéquat dans la chambre primaire 225 et la chambre de réaction 231, la paroi latérale 223 du maître-cylindre présente un conduit 227 qui débouche dans la chambre primaire 225 derrière la coupelle d'étanchéité 252 pour relier la chambre primaire 225 à un réservoir de liquide hydraulique 235 soumis à la pression atmosphérique, comme visible à la figure 9. A la position de repos du piston annulaire 218, visible à la figure 6, le piston annulaire 218 présente au droit du conduit 227 un passage 256 permettant la mise en communication du conduit 227 avec la chambre primaire 225. En revanche, un déplacement vers l'avant du piston annulaire 218 provoque un décalage du passage 256 et donc une obturation du conduit 227 par le piston annulaire 218.

A la position de repos du piston annulaire 218, visible à la figure 6, la cloison transversale 247 est à l'extérieur du maître -cylindre 201. Ainsi, la chambre primaire 225 se compose d'une portion avant 267 définie par l'alésage 202 et d'une portion arrière 250 définie à l'intérieur de l'alésage 238 du piston annulaire 218 jusqu'à la cloison transversale 247. De ce fait, le volume de la chambre primaire 225 n'est pas limité par la longueur du maître -cylindre 201. Le maître-cylindre 201 peut donc être conçu plus court que le maître -cylindre 1 des modes de réalisation précédents.

Le plongeur 213, de forme globalement cylindrique, est monté dans un alésage central 258 du piston moteur 211. Le plongeur 213 porte un joint d'étanchéité 246 pour coulisser de manière étanche dans l'alésage central 258. Le piston annulaire 218 porte à son extrémité arrière une tige de transmission de poussée 257 qui est engagée à travers un trou 263 ménagé dans la paroi avant 268 du piston moteur 211 de manière à déboucher dans l'alésage central 258 du piston moteur 211. Le plongeur 213 est apte à venir en contact par son extrémité avant 233 avec la tige de transmission de poussée 257 pour transmettre la force de commande Fm reçue depuis la tige de commande 215 au piston annulaire 218.

Le piston moteur 211 est relié au piston primaire 219 par une tige de piston 222 rigide s'étendant dans le piston annulaire 218. Ainsi, lorsque le servomoteur 207 est activé, la force pneumatique Fp est transmise au piston primaire 219 qui avance dans la chambre primaire 225 pour générer la pression de commande P1. La tige de piston 222 présente une collerette 259. Un ressort 236 et un élément de liaison 260 sont engagés sur la tige de piston 222 entre la collerette 259 et le corps 248 du piston primaire 219 pour permettre de transmettre la force pneumatique Fp du servomoteur 207 depuis le piston moteur 211 au piston annulaire 218. Pour cela, l'élément de liaison 260 présente un paroi transversale 262 en appui contre une extrémité avant du ressort 236 et un rebord externe 261 en appui contre une extrémité arrière du piston annulaire 218.

Le corps 248 du piston primaire 219 porte une tige de support 249 s'étendant vers l'avant à travers l'orifice de communication 232 qui relie la chambre de réaction 231 à la chambre primaire 225. Un joint torique en caoutchouc 234, visible à la figure 9, est fixé sur une tête de support 264 à l'extrémité de la tige de support 249 dans la chambre primaire 225 pour permettre d'obturer l'orifice de communication 232 dans le mode de fonctionnement de panique du système de commande.

En référence à la figure 9, de manière plus détaillée, la tige de support 249 est filetée et fixée par vissage dans un alésage axial 265 ménagé dans le piston primaire 219. L'extrémité arrière de la tige de piston 222 est retenue dans la paroi avant 268 du piston moteur 211 par un circlips 267. Pour faciliter le montage du système, la tige de transmission de poussée 257 est conçue comme une pièce séparée du piston annulaire 218. Un embout de liaison 266 est emmanché dans le piston annulaire 218 au niveau de son extrémité arrière et la tige de transmission de poussée 257 est fixée sur une paroi transversale 269 de l'embout de liaison 266. La paroi transversale 269 présente également une ouverture pour laisser passer de manière coulissante la tige de piston 222. Le conduit 227 comporte un espace annulaire ménagé entre la face interne de l'alésage 202 du maître -cylindre et la face externe d'une pièce rapportée 276 fixée dans ledit alésage. Le tube de précageage 255 dans lequel est monté le ressort 254 s'appuie sur le piston annulaire 218 par l'intermédiaire d'une rondelle d'appui 277 fixée dans l'alésage 238.

On va maintenant expliquer le fonctionnement du système dans le troisième mode de réalisation.

A la figure 6, le système est en position de repos. Le servomoteur 207 est à l'état passif. A l'état passif du servomoteur 207, la pression basse imposée par la source de dépression 241 règne dans les deux chambres 209 et 210 du carter 206. Le plongeur 213 est en contact hermétique contre la lèvre 271 du clapet caoutchouc 214. La lèvre 271 du clapet caoutchouc 214 est aussi maintenue en contact avec le contour du canal de communication 244 par un ressort de clapet 275. Cependant, il faut noter que le contact hermétique de la lèvre 271 du clapet caoutchouc 214 avec le contour du canal de communication 244 ne s'établit qu'après équilibrage des pressions dans les deux chambres 209 et 210. En variante, un espace pourrait rester ouvert entre la lèvre 271 du clapet caoutchouc 214 et le contour du canal de communication 244 de manière à maintenir les deux chambres 209 et 210 en communication via le canal de communication 244, l'alésage 258 et le trou oblong 240.

A la position de repos du système, l'orifice 232 est ouvert, le joint 234 n'étant pas en contact avec le cloison 247. Ainsi, la pression dans la chambre primaire 225 et dans la chambre de réaction 231 est sensiblement égale. Le conduit 227 est en communication avec la chambre primaire 225 par le passage 256. Ainsi, la pression dans la chambre primaire 225 et la chambre de réaction 231 est sensiblement la pression atmosphérique. Le piston moteur 211 est maintenu à une position arrière de repos par un ressort de rappel 217. D'autre part, un espace existe entre l'extrémité avant 233 du plongeur 213 et 1 a tige de transmission de poussée 257.

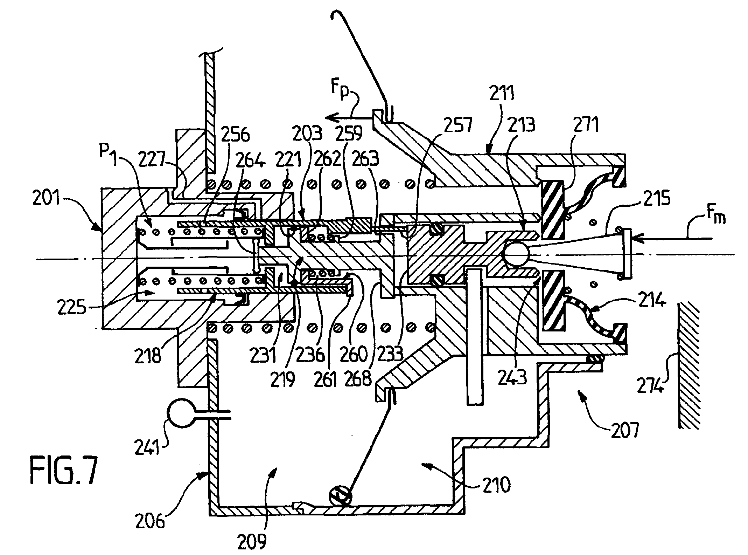

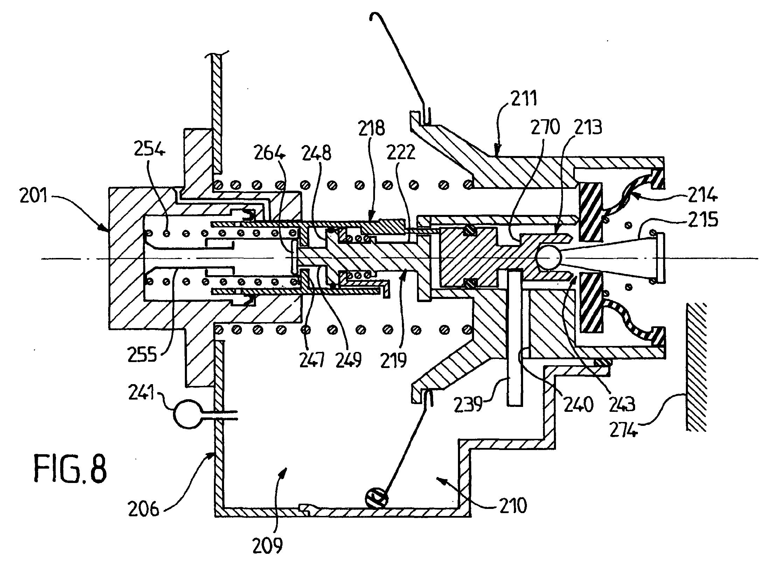

Lorsqu'une force de commande Fm est appliquée à la tige de commande 215, le décalage vers l'avant du plongeur 213 par rapport au piston moteur 211 active le servomoteur 207, comme il a été expliqué auparavant en référence au servomoteur 7. Le plongeur 213 entre conjointement en contact avec la tige de transmission de poussée 257 de manière à transmettre le force de commande Fm au piston annulaire 218, comme visible aux figures 7 et 8. Il en résulte un mouvement d'avance du piston annulaire 218 dans l'alésage 202 qui provoque l'obturation sensiblement immédiate du conduit 227 et qui commence à engendrer la pression hydraulique de commande P1 dans la chambre primaire 225. Selon la dynamique avec laquelle la force de commande Fm est appliquée, le système peut entrer soit dans un mode de fonctionnement normal, représenté à la figure 7, soit dans un mode de fonctionnement de panique, représenté à la figure 8.

On note en particulier que le temps nécessaire à obturer le conduit 227 dépend uniquement de la vitesse d'avance du piston annulaire 218, et donc de la tige de commande 215. Le temps de réponse du servomoteur 207 n'influe pas.

En référence à la figure 7, lorsque la force de commande Fm est appliquée progressivement, par exemple dans le cas d'un freinage non urgent, le mouvement d'avance du plongeur 213 et du piston annulaire 218 est lent, de sorte que le piston primaire 219, poussé par le piston moteur 211 avec la force d'assistance Fp, présente un faible retard de mouvement, lié au temps de réponse du servomoteur 207, sur le piston annulaire 218 et suit donc le piston annulaire 218 avec un décalage de faible amplitude, par exemple sensiblement inférieure à 1,2 mm. Tant que l'application de la force de commande Fm reste progressive, le piston primaire 219 et le piston annulaire 218 se déplacent donc sensiblement ensemble pendant toute la durée du freinage. Le système est alors en mode de fonctionnement normal, comme visible à la figure 7. Du fait de la faible amplitude du décalage entre les déplacements du piston primaire 219 et du piston annulaire 218, la cloison 247 n'entre pas en contact avec le joint 234 et l'orifice 232 reste ouvert pendant le freinage.

Le piston annulaire 218 remplit la fonction de piston de réaction du système. Ainsi, le piston annulaire 18 est soumis à une force de réaction Fr de sens opposé à la force de commande Fm et d'intensité :

$$Fr= (Fp + Fm).S_{218}/(S_{218} + S_{219}),$$

où $S_{218}$ est l'aire de la section annulaire du piston 218 en contact avec la chambre primaire 225 et $S_{219}$ est l'aire de la section complète du piston 219 en contact avec la chambre primaire 225 ou la chambre de réaction 231. Il est à noter que le pression P1 s'exerce de manière égale sur les deux faces de la cloison transversale 247 de sorte qu'il n'en résulte aucune force sur le piston 218. La force de réaction Fr est transmise depuis le piston annulaire 218 à l'opérateur via la tige de transmission de poussée 257, le plongeur 213 et la tige de commande 215 pour permettre à l'opérateur de contrôler la pression de commande P1. La pression de commande P1 pendant le freinage dépend de l'intensité de la force de commande Fm et atteint, par exemple, une valeur de l'ordre de 30 bar.

En référence à la figure 8, lorsque la force de commande Fm est appliquée de manière brutale, par exemple dans le cas d'un freinage très urgent, le mouvement d'avance du plongeur 213 et du piston annulaire 218 est rapide et, du fait du retard de réponse du servomoteur 207, le plongeur 213 se décale vers l'avant par rapport au piston moteur 211 jusqu'à une position de butée définie par la clavette 239 qui bute à la fois sur le bord avant du trou oblong 240 et sur le bord arrière d'une gorge 270 du plongeur 213 dans laquelle elle est engagée. L'ouverture du passage 243 entre le clapet caoutchouc 214 et le plongeur 213 est alors maximale.

Conjointement, le piston annulaire 218 se décale vers l'avant par rapport au piston primaire 219 jusqu'à une position dans laquelle la cloison transversale 247 bute contre la tête de support 2 64 de manière que le joint 234 vienne en contact hermétique autour de l'orifice 232, fermant ainsi la communication entre la chambre de réaction 231 et la chambre primaire 225. Le système est alors en mode de fonctionnement de panique. Par exemple, le déca lage entre le piston annulaire 218 et le piston primaire 219 en position de panique est de l'ordre de 1,2 à 1,5 mm. Dans sa position de butée, le plongeur 213 transmet la force de commande Fm au piston moteur 211 et donc au piston primaire 219 par l'intermédiaire de la clavette 239 et de la tige de piston 222. De ce fait, le piston primaire 219 reçoit la force de commande depuis la tige de commande 215 par l'intermédiaire de la clavette 239.

Dans le mode de fonctionnement de panique, le piston annulaire 218 est soumis à une force de réaction Fr plus intense que dans le cas du fonctionnement normal, à pression P1 égale, car la pression P1 ne s'exerce plus sur la face arrière de la cloison transversale 247.

Du fait de la butée du plongeur 213 sur le piston moteur 211, la force de commande Fm est transmise au piston primaire 219 pour générer la pression de commande P1 dans la chambre primaire 225 indépendamment de la force pneumatique Fp, notamment avant que la force pneumatique Fp ne prenne effet. De plus, l'o bturation du conduit 227 par le piston annulaire 218 est effective dès le début du déplacement du piston annulaire 218 vers l'avant, avant même que celui-ci atteigne sa position de butée. L'augmentation de la pression de commande P1 dans la chambre primaire 225 est donc sensiblement immédiate.

En variante, la transmission de la force de commande Fm au piston primaire 219 peut se faire entre la cloison 247 et la tête de support 264. Dans ce cas, la force de commande Fm n'a pas besoin d'être transmise par l'intermédiaire de la clavette 239, à condition de prévoir une conception suffisamment solide du support 264.

A la fin d'un freinage en mode panique, l'opérateur réduit l'intensité de la force de commande Fm. Lorsque cette intensité est suffisamment réduite, le piston annulaire 218 recule par rapport au piston central 219, ce qui interrompt le contact entre le joint 234 et la cloison 247 et rouvre l'orifice de communication 232. Le système repasse alors en mode de fonctionnement normal. Il est souhaitable de régler correctement le seuil de force de commande au -dessous duquel le système repasse en mode de fonctionnement normal. En effet, si ce seuil est trop élevé, par exemple supérieur à 60 daN, l'opérateur est incapable d'appliquer une force de commande Fm suffisamment intense pour rester en mode de panique, ce qui rend ce mode instable. En revanche, si ce seuil de sortie est choisi trop faible, par exemple inférieur à 5 daN, l'opérateur risque de ne pas réussir à sortir du mode de panique, ce qui peut conduire à réaliser un freinage plus intense que réellement souhaité et à une immobilisation intempestive du véhicule. Selon l'invention, le seuil de sortie est choisi entre 5 et 60 daN, de préférence entre 20 et 50 daN et de façon encore plus préférée à environ 25 daN. Ce réglage est obtenu par le choix du ressort 254 et par l'adaptation de la section $S_{234}$ scellée par le joint 234.

Plus précisément, dans le mode de panique, la force de réaction Fr qui s'oppose à la force de commande Fm et tend à faire reculer le piston annulaire 218 est la somme de la force du ressort 254 et de la force engendrée par la pression de commande P1, laquelle agit sur une section efficace $S_p$ égale à $S_p = S_{218}+S_{219}-S_{234}$ .

Par exemple, lors d'un freinage en mode panique, la force du ressort 234 est de 8 à 10 daN et la pression de commande P1 est environ 50 bar. Pour obtenir un seuil de sortie supérieur ou égal à 25 daN, la force de pression ne doit pas excéder 15 daN, ce qui impose $S_p \leq 0,3$ cm$^2$. Pour satisfaire ce critère, la paroi annulaire du piston 218 est conçue de petite épaisseur et la tête de support 264 est conçue de manière à occuper sensiblement toute la section interne du piston annulaire 218 et à porter le joint 234 le long de son bord.

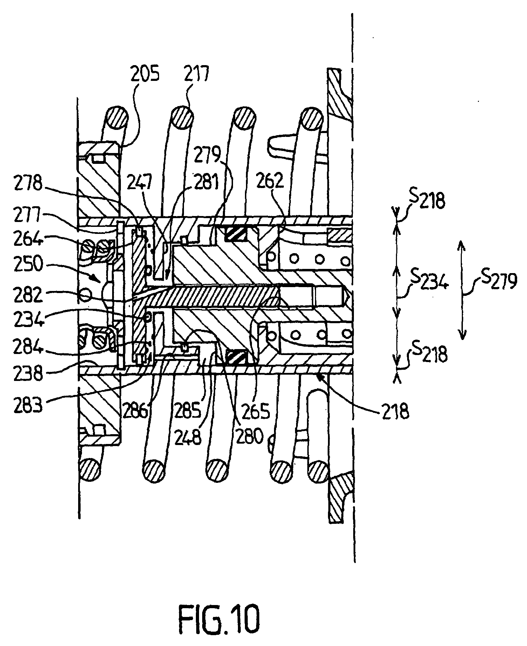

En référence à la figure 10, on décrit maintenant une variante du troisième mode de réalisation de l'invention. Seules sont décrites les différences entre cette variante et le troisième mode de réalisation décrit ci-dessus. Les éléments identiques ou analogues gardent le même chiffre de référence.

Dans cette variante, la tête de support 264 occupe toute la section intérieure du piston annulaire 218 et porte sur son bord périphérique une coupelle d'étanchéité 278 qui coulisse de manière étanche dans l'alésage 238 devant la cloison transversale 247. Le piston central 219 présente pour sa part une partie de tête 279 qui le prolonge à l'avant du corps 248 et présente une section plus petite que le corps 248. L'alésage 238 du piston annulaire 218 présente derrière la cloison transversale 247 un étage intermédiaire adjacent à celle-ci et dont la section est plus grande que la section de l'orifice de communication 232 et plus petite que la section de l'étage arrière de l'alésage 238 dans lequel le corps de piston 248 coulisse de manière étanche. L'étage intermédiaire présente une section adaptée à celle de la partie de tête 279 et porte une coupelle d'étanchéité 280. La partie de tête 279 du piston central 219 coulisse de manière étanche dans l'étage intermédiaire du piston annulaire 218. Ainsi, à la position de repos du système, l'alésage interne 238 du piston annulaire 218 est divisé en trois. La portion arrière 250 de la chambre primaire est situé à l'avant de la tête de support 264 et en communication avec l'alésage du maître-cylindre, un espace arrière 285 est délimité entre le corps de piston 248 et l'étage intermédiaire du piston annulaire 218, et un volume intermédiaire est délimité entre la tête de support 264 et la face avant du piston central 219.

Ce volume intermédiaire est lui-même séparable en deux dans le mode de fonctionnement de panique. La tête de support 264 porte le joint torique 234 sur sa face arrière en vis à vis de la face avant de la cloison 247 à la périphérie de l'orifice 232. Dans la position de repos du système et dans le mode de fonctio nnement normal, il n'y a pas de contact entre le joint 234 et la cloison 247. Dans le mode de panique, le décalage vers l'avant du piston annulaire 218 par rapport au piston central 219 provoque la mise en contact hermétique de la cloison 247 contre le joint 234. Le volume intermédiaire est alors séparé en un espace avant 283 situé à l'extérieur du joint 234 entre la tête de support 264 et la cloison transversale 247, et une chambre intermédiaire 281 définie entre la portion de la tête de support 264 située à l'intérieur du joint 234 et la partie de tête 279.

La tête de support 264 est traversée par un canal 282 qui débouche derrière le joint d'étanchéité 234 et relie la chambre primaire 225 à la chambre intermédiaire 281. Ainsi, la chambre intermédiaire 281 est toujours soumise à la même pression de commande P1 que la chambre primaire 225. Par ailleurs, un conduit de liaison 286 est ménagé axialement dans la paroi du piston annulaire 218 au niveau de la cloison 247 et de l'étage intermédiaire pour relier l'e space avant 283 et l'espace arrière 285, lesquels forment conjointement la chambre de réaction du système.

Dans le mode de fonctionnement normal, la chambre primaire 225, la chambre intermédiaire 281 et la chambre de réaction 283/285 sont à la même pression. Dans le mode de panique, la chambre de réaction est isolée par le joint 234 de la chambre intermédiaire 281 et donc de la pression de commande P1.

Le seuil d'intensité de la force de commande Fm à partir duquel le système revient dans le mode de fonctionnement normal après un freinage en mode de panique peut être calculé de la même manière que dans le cas précédent. Cependant, dans cette variante de réalisation, la pression de commande P1 ne s'exerce pas de la même manière sur le piston annulaire 218, puisque la chambre intermédiaire 281 fournit une force résultante vers l'avant. Plus précisément, la contribution de la pression P1 à la force de réaction Fr tendant à faire reculer le piston annulaire 218 agit dans cette variante une section efficace $S_p$ égale à $S_p=S_{218} - (S_{279} - S_{234})$, où $S_{279}$ est la section de la partie de tête 279 du piston central 219. Le choix de la section $S_{279}$ permet donc de

compenser partiellement ou totalement la contribution de la pression P1 à la force de réaction Fr, ce qui facilite le réglage du seuil de sortie du mode panique. On note aussi que dans cette variante, la section $S_{234}$ scellée par le joint 234 contribue en sens opposé par rapport au mode de réalisation de la figure 9.

De préférence, un petit ressort hélicoïdal 284 e st logé dans l'espace avant 283 autour du joint 234 et comprimé entre la tête de support 264 et la cloison 247 pour assurer que le système sort effectivement du mode de panique lorsque la force de commande diminue suffisamment.

Les modes de réalisation de l'invention décrits ci-dessus fournissent des systèmes de commande de freinage dans lesquels le servomoteur à l'état activé est apte à exercer la force d'assistance sur le piston central, aussi bien dans le mode de fonctionnement normal du système que dans le mode de fonctionnement de panique, lorsqu'un mode de fonctionnement de panique est prévu. Cette force d'assistance tend à accroître la pression de commande dans le maître -cylindre. Dans ces systèmes de commande de freinage, le piston annulaire est apte à transmettre la force de réaction au moyen de commande aussi bien dans le mode de fonctionnement normal du système que dans le mode de fonctionnement de panique, lorsqu'un mode de fonctionnement de panique est prévu.

Les systèmes décrits ci-dessus emploient un servomoteur à dépression. Un servomoteur pneumatique peut également être employé à la place du servomoteur à dépression. Le maître -cylindre peut identiquement être à simple circuit, à double circuit comme décrit ci - dessus, ou bien à deux circuits parallèles.

Sur les figures, les déplacements des pièces mobiles ont pu être exagérés pour expliquer le fonctionnement du système et ne correspondent pas nécessairement aux déplacements réels. Bien que l'invention ait été décrite en liaison avec plusieurs mo des de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

**1.** Système de commande de freinage muni d'un servomoteur d'assistance (7, 207), ledit système de commande comportant :

- un maître-cylindre (1, 201) présentant un alésage (2, 202) ouvert sur une extrémité (5, 205), dite arrière, dudit maître -cylindre,
- un piston composite (3, 203) mobile selon une direction axiale (A) de l'alésage (2, 202) pour générer une pression de commande (P1) dans une chambre primaire (25, 125, 225) du maître-cylindre (1), ledit piston composite comprenant un piston annulaire (18, 218) engagé dans ledit alésage et déplaçable de manière étanche dans l'alésage (2, 202) selon sa direction axiale (A) et un piston central (19, 119, 219) mobile axialement de manière étanche dans ledit piston annulaire (18, 218),

- un moyen de commande (15, 215) déplaçable par un opérateur entre au moins une position de commande pour activer ledit servomoteur d'assistance (7, 207) et une position de repos dans laquelle le servomoteur d'assistance est à l'état passif,

**caractérisé par le fait que** le servomoteur d'assistance est agencé pour exercer, à l'état activé, sur ledit piston central (19, 119, 219), une force d'assistance (Fp) afin de générer ladite pression de commande (P1), ledit piston annulaire (18, 218) étant apte, sous l'action de ladite pression de commande (P1), à transmettre audit moyen de commande (15, 215) une force de réaction (Fr) orientée vers ladite position de repos.

**2.** Système selon la revendication 1, **caractérisé par le fait que** ledit moyen de commande comporte une tige de commande (15, 215) agencée derrière le piston composite (3) et mobile selon ladite direction axiale (A), ladite tige de commande étant apte à recevoir du piston annulaire (18, 218) et à transmettre audit opérateur ladite force de réaction (Fr), ladite tige de commande étant apte à recevoir dudit opérateur une force de commande (Fm) orientée sensiblement vers l'avant pour déplacer la tige de commande vers la position de commande et à transmettre au piston annulaire ladite force de commande (Fm) pour générer, en combinaison avec la force d'assistance (Fp), ladite pression de commande (P1).

**3.** Système selon la revendication 2, **caractérisé par le fait que** ledit maître-cylindre (1, 201) comporte un conduit (27, 227) destiné à relier ladite chambre primaire (25, 125, 225) à un réservoir de fluide (35, 235) pour maintenir un volume de fluide dans la chambre primaire, ledit piston annulaire (18, 218) étant agencé de manière à être déplacé par la tige de commande dans ladite position de commande à une position dans laquelle ledit piston annulaire obture ledit conduit (27, 227), afin de permettre une augmentation de ladite pression de commande (P1) dans ladite chambre primaire.

**4.** Système selon la revendication 2 ou 3, **caractérisé par le fait que** ledit piston composite (3, 203) comporte une cloison transversale (119b, 247) pour définir une chambre de réaction (31, 231) séparable de ladite chambre primaire (125, 225), ladite cloison transversale étant percée d'un orifice de communication (32, 232) pour mettre en communication ladite chambre primaire et ladite chambre de réaction, ledit orifice de communication étant ouvert dans un état de fonctionnement normal dudit système, de sorte que la pression dans ladite chambre de réaction est alors sensiblement égale à la pression de commande (P1) dans ladite chambre primaire, ledit système comportant un moyen pour obturer ledit orifice de communication dans un état de fonctionnement de panique dudit système, de sorte que la chambre de réaction est alors isolée de la pression de commande (P1) régnant dans ladite chambre primaire.

5. Système selon la revendication 4, **caractérisé par le fait que** ledit piston annulaire (18, 218) est apte à coulisser axialement par rapport audit piston central (119) vers l'avant sous l'action de ladite force de commande (Fm),ledit système étant dans ledit état de fonctionnement normal lorsqu'un décalage du piston annulaire dans la direction avant par rapport au piston central est inférieur à une amplitude maximale prédéterminée, ledit système étant dans ledit état de fonctionnement de panique lorsque ledit décalage atteint ladite amplitude maximale, ledit piston central étant apte, dans l'état de fonctionnement de panique du système, à recevoir ladite force de commande (Fm) depuis la tige de commande pour générer ladite pression de commande (P1) indépendamment de ladite force d'assistance (Fp).

6. Système selon la revendication 5, **caractérisé par le fait que** ladite amplitude maximale du décalage vers l'avant dudit piston annulaire (18) correspond à une venue en butée du piston annulaire (18, 218) par rapport au piston central (119, 219) au niveau de ladite cloison transversale (119b, 247) de manière à obturer ledit orifice de communication (32, 232).

7. Système selon la revendication 5 ou 6, **caractérisé par le fait que** ledit piston central (119) s'étend vers un fond (4) dudit alésage (2) au-delà dudit piston annulaire (18) et porte à son extrémité avant ladite cloison transversale (119b), ladite cloison transversale (119b) séparant ladite chambre primaire (125), située entre ladite cloison transversale (119b) et ledit fond (4), de ladite chambre de réaction (31) située entre ladite cloison transversale et ledit piston annulaire, de sorte que le piston annulaire est soumis à la pression régnant dans ladite chambre de réaction.

8. Système selon la revendication 7, **caractérisé par le fait que** ledit moyen pour obturer l'orifice de communication comporte un clapet (34) monté dans ledit orifice de communication (32), ledit clapet (34) comportant un poussoir (343) mobile axialement dans ledit orifice entre une position d'ouverture, pour laquelle ledit orifice est ouvert et une position de fermeture, dans laquelle ledit poussoir (343) obture ledit orifice de manière sensiblement étanche, une extrémité avant (37) dudit piston annulaire (18) en position de panique étant apte à repousser ledit poussoir en position de fermeture.

9. Système selon la revendication 8, **caractérisé par le fait que** ledit clapet (34) comporte un ressort de rappel (342) en appui entre ladite cloison transversale (119b) et ledit poussoir (343) pour pousser ledit poussoir vers sa position d'ouverture.

10. Système selon la revendication 5 ou 6, **caractérisé par le fait que** ladite cloison transversale (247) est fixée à l'intérieur du piston annulaire (218), ledit piston central (219) comportant un corps (248) coulissant de manière étanche à l'intérieur du piston annulaire derrière ladite cloison transversale, ledit piston central (219) portant un support (249, 264) s'étendant à l'avant dudit piston central à travers ledit orifice de communication (232), ledit moyen pour obturer l'orifice de communication comportant un joint d'étanchéité (234) fixé audit support à l'avant de ladite cloison transversale (247) et agencé de manière à venir en contact hermétique avec ladite cloison transversale autour dudit orifice de communication lorsque ledit piston annulaire (218) est en position de panique.

11. Système selon la revendication 10, **caractérisé par le fait que** ladite chambre de réaction (231) est définie entre ladite cloison transversale (247) et ledit corps (248) du piston central, ladite chambre primaire (225) comprenant une portion (250) de l'intérieur du piston annulaire (218) située à l'avant de ladite cloison transversale et en communication avec l'alésage (202) du maître -cylindre (201).

12. Système selon la revendication 10, **caractérisé par le fait que** ledit support comporte une tête (264) coulissant de manière étanche dans ledit piston annulaire à l'avant de la dite cloison transversale (247), ladite chambre de réaction comprenant un espace avant (283) défini entre ladite tête de support et ladite cloison transversale, ladite chambre primaire (225) comprenant une portion (250) de l'intérieur du piston annulaire située à l'avant de ladite tête de support (264) et en communication avec l'alésage (202) du maître - cylindre (201), ladite tête de support étant traversée par un canal (282) débouchant derrière ledit joint d'étanchéité (234) de manière à relier ladite chambre primaire à une chambre intermédiaire (281) définie entre ladite cloison transversale et ledit piston central (219).

13. Système selon la revendication 12, **caractérisé par**

**le fait qu'**un moyen de rappel élastique (284) est agencé dans ledit espace avant (283) comprimé entre ladite tête de support (264) et ladite cloison transversale (247), de manière à faciliter une réouverture dudit orifice de communication lorsque ladite force de commande (Fm) diminue.

14. Système selon la revendication 12 ou 13, **caractérisé par le fait que** l'intérieur (238) du piston annulaire (218) présente un étage arrière dans lequel coulisse de manière étanche ledit corps (248) du piston central (219) et, entre ledit étage arrière et ladite cloison transversale (247), un étage intermédiaire dans lequel coulisse de manière étanche une partie de tête (279) dudit piston annulaire (218), ladite chambre intermédiaire (281) étant définie entre ladite cloison transversale et ladite partie de tête du piston annulaire.

15. Système selon la revendication 14, **caractérisé par le fait que** l'étage intermédiaire du piston annulaire présente une section plus petite que l'étage arrière et plus grande que l'orifice de communication (232), ladite chambre de réaction (231) comportant un espace arrière (285) défini entre ledit corps (248) du piston central et l'étage arrière du piston annulaire (218), un conduit de liaison (286) étant ménagé dans la paroi du piston annulaire pour relier ledit espace avant (283) et ledit espace arrière.

16. Système selon l'une des revendications 1 à 15, **caractérisé par le fait que** ledit servomoteur d'assistance (7, 207) comporte un carter agencé derrière ledit maître-cylindre (1, 201), ledit carter (6, 206) étant séparé par une paroi transversale (8, 11 ; 208, 211), mobile axialement de manière sensiblement étanche dans ledit carter, en une chambre à basse pression (9, 209) située à l'avant de ladite paroi transversale, ladite chambre à basse pression étant reliée à une source de dépression (41, 241) pour y maintenir une pression sensiblement inférieure à la pression atmosphérique, et une chambre de travail (10, 210) située à l'arrière de ladite paroi transversale, ladite paroi transversale étant percée d'un canal de communication (44, 244) entre ladite chambre de travail et ladite chambre à basse pression, ledit moyen de commande (15, 215) étant apte à actionner des moyens d'obturation sélectifs (13, 14 ; 213, 214) pour, à la position de repos dudit moyen de commande, ouvrir ledit canal de communication (44, 244) et fermer un passage (43, 243) entre ladite chambre de travail et l'extérieur dudit carter, de sorte que le servomoteur (7, 207) est alors inactif, ladite basse pression étant aussi établie dans ladite chambre de travail (10, 210) et, à la position de commande dudit moyen de commande, obturer ledit canal de communication (44, 244) et ouvrir ledit passage (43, 243), pour laisser s'établir une pression supérieure à ladite basse pression dans ladite chambre de travail, ledit servomoteur étant alors activé, ladite paroi transversale (8, 11 ; 208, 211) étant liée audit piston central (19, 119, 219) pour lui transmettre la force d'assistance (Fp) pneumatique résultant de l'écart entre les pressions dans la chambre à basse pression et la chambre de travail.

17. Système selon l'une des revendications 1 à 6 et 10 à 16, **caractérisé par le fait que** la chambre primaire (225) du maître - cylindre est en communication avec un volume intérieur (250) du piston annulaire (218) s'étendant jusqu'à un niveau situé à l'extérieur dudit alésage du maître-cylindre.

FIG.1

FIG.2

FIG.3

FIG.4

FIG.5

FIG.6

EP 1 216 907 A1

FIG.7

FIG.8

EP 1 216 907 A1

FIG.9

FIG.10

**Office européen**

**des brevets**

## RAPPORT DE RECHERCHE EUROPEENNE

Numéro de la demande

EP 01 40 3028

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 6 079 208 A (LEBOISNE CEDRIC ET AL) 27 juin 2000 (2000-06-27) * colonne 3, ligne 26 - colonne 5, ligne 63; figures 1-4 * --- | 1 | B60T13/573 B60T13/565 |
| A | WO 00 23308 A (BOSCH SIST DE FRENADO SL ;SIMON BACARDIT JUAN (FR)) 27 avril 2000 (2000-04-27) * page 3, ligne 23 - page 4, ligne 23; figures 1,2 * --- | 1 | |
| A,D | US 5 921 084 A (SIMON BACARDIT JUAN ET AL) 13 juillet 1999 (1999-07-13) * colonne 4, ligne 52 - colonne 8, ligne 12; figures 1,2 * ----- | 1 | |

DOMAINES TECHNIQUES RECHERCHES (Int.Cl.7)

B60T

Le présent rapport a été établi pour toutes les revendications

| Lieu de la recherche | Date d'achèvement de la recherche | Examinateur |
|---|---|---|
| BERLIN | 12 mars 2002 | Blurton, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 40 3028

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-03-2002

| Document brevet cité au rapport de recherche | | Date de publication | Membre(s) de la famille de brevet(s) | | Date de publication |
|---|---|---|---|---|---|
| US 6079208 | A | 27-06-2000 | FR | 2765171 A1 | 31-12-1998 |
| | | | FR | 2774345 A1 | 06-08-1999 |
| | | | DE | 69800871 D1 | 05-07-2001 |
| | | | DE | 69800871 T2 | 15-11-2001 |
| | | | EP | 0993398 A1 | 19-04-2000 |
| | | | ES | 2157665 T3 | 16-08-2001 |
| | | | WO | 9900283 A1 | 07-01-1999 |
| WO 0023308 | A | 27-04-2000 | FR | 2784642 A1 | 21-04-2000 |
| | | | EP | 1123233 A1 | 16-08-2001 |
| | | | WO | 0023308 A1 | 27-04-2000 |
| | | | US | 6318081 B1 | 20-11-2001 |
| US 5921084 | A | 13-07-1999 | FR | 2751602 A1 | 30-01-1998 |
| | | | AU | 718664 B2 | 20-04-2000 |
| | | | AU | 2967097 A | 10-02-1998 |
| | | | BR | 9710395 A | 17-08-1999 |
| | | | EP | 0912382 A1 | 06-05-1999 |
| | | | WO | 9803385 A1 | 29-01-1998 |
| | | | JP | 2000514746 T | 07-11-2000 |
| | | | PL | 331342 A1 | 05-07-1999 |
| | | | TR | 9900085 T2 | 21-04-1999 |

EPO FORM P0460